# EUROPÄISCHE PATENTSCHRIFT

(11) **EP 3 162 661 B1**
(45) Veröffentlichungstag und Bekanntmachung des Hinweises auf die Patenterteilung: **29.08.2018**
(21) Anmeldenummer: 16196578.5
(22) Anmeldetag: 31.10.2016
(51) Int. Cl.: B62D 5/04, B62D 15/02, B66F 9/075, G01B 11/26

(54) **VORRICHTUNG UND VERFAHREN ZUR ERFASSUNG EINER IST-STELLUNG EINES ELEKTRISCH GELENKTEN RADES**
DEVICE AND METHOD FOR CAPTURING THE CURRENT POSITION OF AN ELECTRICALLY STEERED WHEEL
DISPOSITIF ET PROCÉDÉ DE DÉTECTION D'UNE POSITION RÉELLE D'UNE ROUE À COMMANDE ÉLECTRIQUE

(30) Priorität: 02.11.2015 DE 102015118750
(43) Veröffentlichungstag der Anmeldung: 03.05.2017
(73) Patentinhaber: Jungheinrich Aktiengesellschaft, 22047 Hamburg (DE)
(72) Erfinder: Düwel, Matthias, 22850 Norderstedt (DE); Glaeske, Jens, 22844 Norderstedt (DE)
(74) Vertreter: Hauck Patentanwaltspartnerschaft mbB

(56) Entgegenhaltungen:
- EP-A2- 1 308 371
- DE-A1- 4 243 778

## Beschreibung

Die vorliegende Erfindung betrifft eine Vorrichtung und ein Verfahren zur Erfassung der Ist-Stellung eines gelenkten Rades bei einer elektrischen Lenkung für ein Flurförderzeug. Eine elektrische Lenkung zeichnet sich dadurch aus, dass eine Sollwertvorgabe für den Lenkwinkel elektrisch zu einem Lenkantrieb übertragen wird.

Aus DE 42 43 778 A1 ist eine Vorrichtung und ein Verfahren zur Lageerkennung bekannt, bei dem ein Codeträger eine erste Spur mit einer Vielzahl gleichartiger Markierungen aufweist und eine zweite Spur mit unterscheidbaren Markierungen oder gleichen Markierungen in unterschiedlichen Abständen besitzt. Beide Spuren besitzen dabei einen unterschiedlichen Radius.

Aus DE 101 53 915 A1 ist ein Verfahren und eine Vorrichtung zur Erfassung der Ist-Stellung eines zu lenkenden Rades an einem Flurförderzeug mit elektrischer Lenkung bekannt geworden. An einem Flurförderzeug wird ein zu lenkendes Rad über eine elektrische Lenkung gesteuert. Hierbei wird auf einen Sensor, der die Ist-Position des gelenkten Rades erfassen kann, verzichtet und ausgehend von einer Startposition inkrementell der Ist-Wert für die Stellung des gelenkten Rades berechnet. Bei dem bekannten Verfahren misst der Lenkantrieb seine Umdrehungen relativ zu einer Ausgangsposition. Das Flurförderzeug besitzt eine Erfassungseinrichtung, die ein Codierelement mit mehreren Abschnitten und einem zum Codierelement ausgerichteten Sensor aufweist. Die Abschnitte verlaufen jeweils radial zur Radschwenkachse und besitzen jeweils eine andere Bogenlänge als die übrigen Abschnitte. Der auf das Codierelement gerichtete Sensor ist in der Lage, einen Übergang in und aus einem Abschnitt zu erfassen, wobei während einer Lenkbewegung des Rades Codierelement und Sensor relativ zueinander bewegt werden. Zur Erfassung der Ist-Position des gelenkten Rades wird das Rad in eine erste Drehrichtung gedreht, bis der Sensor einen ersten Übergang erfasst. Ansprechend auf den erfassten Übergang wird das Rad in die entgegengesetzte Richtung gedreht, bis erneut ein Übergang von dem Sensor erfasst wird. Die Lenksteuerung bestimmt aus der zurückgelegten Winkelstrecke zwischen den beiden erfassten Übergängen den Abschnitt auf dem Codierelement, der durch die beiden

Übergänge begrenzt ist. Aufgrund der unterschiedlichen Bogenlänge der Abschnitte kann diese Zuordnung eindeutig von der Lenksteuerung vorgenommen werden. Aus den erkannten Abschnitten des Codierelements bestimmt die Lenksteuerung die Ist-Stellung des Rades. Ausgehend von der Ist-Stellung des Rades als Ausgangsposition kann durch eine inkrementelle Messung der Lenkbewegung die jeweils aktuelle Ist-Stellung bestimmt werden.

Als nachteilig am Stand der Technik hat sich herausgestellt, dass bei dem Überfahren der Abschnitte die Bogenlänge während der Referenzierfahrt nicht genau genug gemessen wird, beispielsweise durch einen nicht optimal eingestellten Sensor und es zu Fehlzuordnungen kommt. Eine genaue Bestimmung der Ist-stellung ist beispielsweise bei einem Fahrzeug mit 3 gelenkten Rädern erforderlich, da schon eine geringe Winkel-Fehlmessung zu einem erhöhten Reifenverschleiß führt.

Der Erfindung liegt die Aufgabe zugrunde, eine Vorrichtung und ein Verfahren zur Erfassung der Ist-Stellung eines gelenkten Rades bereitzustellen, die mit einfachen Mitteln eine möglichst genaue Erfassung der Verstellbewegung des gelenkten Rades erlauben.

Erfindungsgemäß wird die Aufgabe durch eine Vorrichtung mit den Merkmalen aus Anspruch 1 sowie durch ein Verfahren mit den Merkmalen aus Anspruch 13 gelöst. Vorteilhafte Ausgestaltungen bilden die Gegenstände der Unteransprüche.

Die erfindungsgemäße Vorrichtung ist vorgesehen und bestimmt zur Erfassung der Ist-Stellung eines gelenkten Rades bei einer elektrischen Lenkung für ein Flurförderzeug. Die Vorrichtung weist einen Lenkantrieb auf, der das gelenkte Rad um eine bevorzugt vertikale Achse stellt. Ferner besitzt die Vorrichtung eine Erfassungseinrichtung, die ein sich mit dem gelenkten Rad drehendes Codierelement mit einer Vielzahl von sich in ihrer Bogenlänge unterscheidenden Abschnitten und einen fahrzeugfesten Sensor aufweist. Entscheidend ist die relative Bewegung von Codierelement und Sensor, so dass auch das Codierelement fahrzeugfest und der Sensor mitdrehend angeordnet sein können. Das Codierelement besitzt zwei Typen von Abschnitten. Bei den Abschnitten des Codierelements besitzen die Abschnitte von einem ersten Typ jeweils eine gegenüber anderen Abschnitten vom ersten Typ eindeutige Bogenlänge. Die Abschnitte von einem zweiten Typ besitzen jeweils die gleiche Bogenlänge wie die anderen Abschnitte vom zweiten Typ. Die Bogenlänge der Abschnitte vom ersten Typ ist dabei so gewählt, dass der Abschnitt eindeutig über seine Bogenlänge identifiziert werden kann. Bei der Erfindung werden das gelenkte Rad und das Codierelement derart relativ zueinander angeordnet, dass mindestens einer der Abschnitte vom ersten Typ vollständig in seiner Bogenlänge erfasst wird. Bei der erfindungsgemäßen Vorrichtung wird die Bogenlänge eines der Abschnitte von dem ersten Typ erfasst, um die Ist-Stellung des gelenkten Rades zu ermitteln. Die erfasste Bogenlänge wird vor einer Positionsbestimmung korrigiert. Die erfindungsgemäße Vorrichtung schafft die Möglichkeit, die Abschnitte mit jeweils gleicher Bogenlänge in Bezug zu den Abschnitten mit unterschiedlicher Bogenlänge zu setzen und/oder auf die Differenz von erfassten Bogenlängen abzustellen, so dass der Einfluss von systematischen Messfehlern auf die Istwertbestimmung verringert werden kann. Hierzu werden die Abschnitte mit ihrer Bogenlänge gemessen und mit einem Referenzwert für die Bogenlänge verglichen und die Korrektur ausgeführt.

In einer bevorzugten Weiterbildung der Erfindung detektiert der Sensor Übergänge zwischen Abschnitten des ersten und des zweiten Typs. Ein solcher Sensor kann beispielsweise optisch arbeiten oder als Nähesensor ausgebildet sein.

In einer bevorzugten Weiterbildung ermittelt die Erfassungseinheit den Ist-Wert des gelenkten Rades aus einem Übergang zu einem der Abschnitte vom ersten Typ sowie aus einer erfassten und korrigierten Bogenlänge des Abschnitts.

In einer bevorzugten Ausgestaltung wird zusätzlich die Bogenlänge für einen Abschnitt vom zweiten Typ erfasst. Diese Abschnitte besitzen sämtlich die gleiche Bogenlänge, so dass der erfasste Wert der Bogenlänge mit einer vorbestimmten Referenzbogenlänge verglichen werden kann. Bei einer Abweichung zwischen erfasster Bogenlänge und Referenzbogenlänge wird der Unterschied als Korrekturwert gespeichert. Systematische Messfehler, die sich beispielsweise aus einem Verstellen des Sensors am Fahrzeug ergeben, können auf diese Weise in den Korrekturwert einfließen. Der Korrekturwert gibt dabei den Unterschied zwischen gemessener und tatsächlicher Bogenlänge an. Bevorzugt wird der Korrekturwert bei der Bestimmung der Bogenlänge für den Abschnitt vom ersten Typ berücksichtigt. Dies bedeutet, dass, wenn beispielsweise die erfasste Bogenlänge um den Korrekturwert zu klein gegenüber der Referenzbogenlänge ist, dass dann der Korrekturwert für die Bestimmung des Ist-Werts des erfassten Abschnitts vom ersten Typ berücksichtigt wird.

In einer weiteren bevorzugten Ausgestaltung wird die Bogenlänge für zwei Abschnitte vom ersten Typ erfasst und deren Differenzwert mit einem vorbestimmten Differenzwert verglichen. Eine Abweichung zwischen erfasstem und vorbestimmtem Differenzwert kann als ein Korrekturwert gespeichert werden. Der gespeicherte Korrekturwert kann bei der Bestimmung der Bogenlänge für den Abschnitt vom ersten Typ berücksichtigt werden. Genauso wie bei der Bestimmung des Korrekturwerts mithilfe der Abschnitte vom zweiten Typ, kann bei der Erfassung des Differenzwerts ein systematischer Fehler erfasst und für die Korrektur eingesetzt werden.

Erfindungsgemäß ist das Codierelement scheibenförmig mit alternierenden Abschnitten vom ersten und zweiten Typ ausgebildet. Bevorzugt sind die Abschnitte auf einer Flachseite des scheibenförmigen Codierelements ausgebildet. Bei dieser Ausgestaltung des Codierelements ist der Sensor auf die Flachseite des Codierelements gerichtet, um die Übergänge zwischen den Abschnitten zu detektieren. Bevorzugt ist hierbei der Sensor fahrzeugfest und das Codierelement mitdrehend angeordnet.

In einer bevorzugten Weiterbildung der erfindungsgemäßen Vorrichtung ist die Differenz der Bogenlänge zwischen zwei benachbarten Abschnitten des ersten Typs möglichst groß gewählt. Insbesondere ist die Differenz der Bogenlänge zu dem oder den für die Geradeausfahrt vorgesehenen Abschnitten maximal im Vergleich zu den übrigen Differenzen an dem Codierelement. Die Anordnung der Abschnitte auf dem Codierelement erfolgt bevorzugt so, dass die Abschnitte nahe den Abschnitten für die Geradeausfahrt eine möglichst große Winkeldifferenz zu den nächstfolgenden Abschnitten darstellen.

Die der Erfindung zugrundeliegende Aufgabe wird ebenfalls durch ein Verfahren mit den Merkmalen aus Anspruch 13 gelöst.

Das erfindungsgemäße Verfahren ist vorgesehen und bestimmt zur Erfassung von einer Ist-Stellung eines gelenkten Rades bei einer elektrischen Lenkung für ein Flurförderzeug, wobei eine erfasste Bogenlänge korrigiert wird. Bei der Bestimmung des Korrekturwerts wird das gelenkte Rad gedreht und die Bogenlänge eines Abschnitts vom zweiten Typ erfasst. Die erfasste Bogenlänge wird mit einem Referenzwert verglichen und die Abweichung zwischen erfasstem Wert und Referenzwert wird als Korrekturwert gespeichert. Bei der Erfassung der Ist-Stellung
des gelenkten Rades wird das Rad in eine erste Drehrichtung gedreht, bis der Sensor einen ersten Übergang zwischen zwei benachbarten Abschnitten des Codierelements erfasst. Nachfolgend wird unter Beibehaltung oder Umkehr der Drehrichtung das gelenkte Rad derart ausgelenkt, dass ein Abschnitt des ersten Typs vollständig überstrichen wird. Die zurückgelegte Bogenlänge des überstrichenen Abschnitts wird korrigiert. Das Verfahren besitzt den Vorteil, dass etwaige systematische Fehler über die Korrektur ausgeglichen werden können. Auf diese Weise ist das Verfahren zur Bestimmung des Ist-Werts im besonderen Maße robust und genau.

In einer bevorzugten Ausgestaltung der Erfindung wird die Drehbewegung ohne Umkehr der Drehrichtung durchgeführt.

Bei dem erfindungsgemäßen Verfahren wird die Bogenlänge für einen Abschnitt vom zweiten Typ erfasst und mit einer vorbestimmten Referenzbogenlänge verglichen. Ein solcher Vergleich ist möglich, da die Abschnitte vom Typ zwei stets die gleiche Bogenlänge besitzen. Tritt eine Abweichung zwischen erfasster Bogenlänge und Referenzbogenlänge auf, so kann diese Abweichung als Korrekturwert gespeichert werden. Der gespeicherte Korrekturwert erlaubt es, nachfolgend die Werte für die erfasste Bogenlänge zu korrigieren. Das Verfahren beruht auf der Erkenntnis, dass systematische Fehler bei der Erfassung der Bogenlänge sich in gleicher Weise auf Abschnitte vom ersten wie vom zweiten Typ auswirken. In einer weiter bevorzugten Ausgestaltung werden zwei Abschnitte vom ersten Typ erfasst und deren Referenzwert mit einem vorbestimmten Referenzwert verglichen. Bei einer Abweichung zwischen erfasstem und vorbestimmtem Referenzwert wird dieser als Korrekturwert gespeichert. Bei diesem Verfahrensschritt werden systematische Messfehler erfasst, die sich in der Differenz zweier erfasster Bogenlängen niederschlagen.

In einer Weiterbildung wird die Bogenlänge für zwei Abschnitte vom ersten Typ erfasst und deren Differenzwert mit einem vorbestimmten Differenzwert verglichen. Der erfasste Differenzwert wird für die Lenkwinkelbestimmung verwendet. Die Änderung zwischen erfasstem und vorbestimmtem Differenzwert wird als Maß für die Zuverlässigkeit der Lenkwinkelbestimmung herangezogen.

In einer bevorzugten Weiterführung des erfindungsgemäßen Verfahrens wird nicht nur der Wert für die erfasste Bogenlänge korrigiert, sondern auch der Wert für die Position eines Übergangs für die Bereiche wird mit Hilfe des Korrekturwerts berichtigt. Dies schließt einen systematischen Fehler aufgrund einer Verstellung des Sensors aus.

In einer bevorzugten Weiterbildung des erfindungsgemäßen Verfahrens wird der Korrekturwert für mehrere Bestimmungen der Ist-Stellung gespeichert. Dies bedeutet, dass nicht bei jedem Einschalten bzw. bei jeder Referenzierfahrt der elektrischen Lenkung erneut der Korrekturwert berechnet werden muss, sondern dieser für eine Reihe von Bestimmungen der Ist-Stellung des gelenkten Rades beibehalten werden kann.

Ein bevorzugtes Ausführungsbeispiel der Erfindung wird nachfolgend anhand von Figuren erläutert. Es zeigen:
- Fig. 1: ein beispielhaftes Codierelement nach den Vorgaben der Erfindung, und
- Fig. 2: in einer schematischen Ansicht ein Beispiel für eine elektronische Lenkung, bei der das Codierelement aus Fig. 1 eingesetzt werden kann.

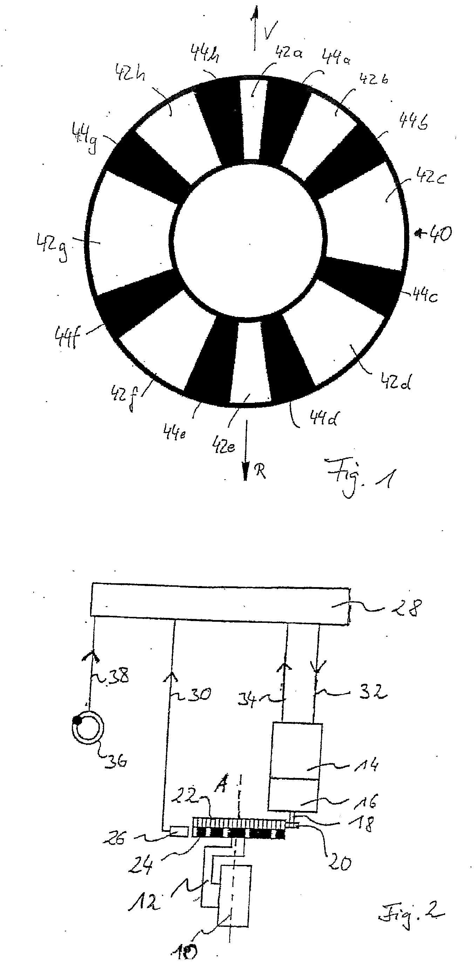

Fig. 2 zeigt eine schematische Ansicht einer elektrischen Lenkung für ein Flurförderzeug, wie sie beispielsweise auch der elektrischen Lenkung in DE 101 53 915 zugrunde liegt. Das gelenkte Rad 10 ist an einem Drehschemel 12 gehalten. Der Drehschemel 12 ist um die Drehachse A drehbar an dem Fahrzeug gelagert. Angetrieben wird der Drehschemel über einen Elektromotor 14, dessen Abgangswelle in einem Getriebe 16 mündet. Das Getriebe 16 übersetzt die Drehbewegung des Elektromotors 14 und besitzt eine Abgangswelle 18, die mit einem Ritzel 20 in einem Zahnrad 22 des Drehschemels kämmt. Ein Codierelement 24 dreht mit dem Drehschemel 12 zusammen. Die Drehbewegung des Codierelements 24 wird von einem Sensor 26 erfasst. In dem dargestellten Beispiel aus Fig. 2 ist der Sensor 26 radial zu dem Codierelement 24 angeordnet. Selbstverständlich kann der Sensor 26 auch auf einer Flachseite oberhalb oder unterhalb des Codierelements angeordnet sein.

Die in Fig. 2 dargestellte elektrische Lenkung besitzt eine Lenksteuerung 28, die über eine Leitung 30 die Signale des Sensors einliest und auswertet. Ebenso liegt ein Sollwert des Lenkrades 36 über eine Leitung 38 an der Lenksteuerung 28 an. Über die Leitung 32 gibt die Lenksteuerung Steuerbefehle an den Elektromotor 14 oder der Elektromotor wird direkt durch die Lenksteuerung angesteuert. Der Elektromotor 14 besitzt ein Sensorlager. Das Sensorlager kann beispielsweise zwei digitale, um 90° versetzte Signale liefern. Durch eine Vierfachauswertung können aus dem Lager mit 64 Impulsen pro Kanal und pro Umdrehung insgesamt 256 Impulse gewonnen werden, was zu einer Auflösung zur Drehbewegung des Elektromotors von 1,41° führt. Aufgrund einer Getriebeübersetzung von beispielsweise 1 : 200 kann eine relative Auflösung von 0,007° erreicht werden. Das Sensorlager in dem Elektromotor ist beispielsweise bei einer feldorientierten Regelung einer Asynchronmaschine bereits vorgesehen und muss nicht zusätzlich eingebaut werden. Statt eines Sensorlagers kann auch ein außerhalb des Lagers angeordneter Sensor vorgesehen sein, der beispielsweise über Hall-Elemente arbeitet.

Fig. 1 zeigt ein Codierelement 40, das weiß dargestellte Abschnitte 42a - 42h besitzt, die gemeinsam dem ersten Typ von Abschnitten angehören. Die Abschnitte 44a - 44h gehören zum zweiten Typ der Abschnitte. Die Abschnitte können beispielsweise als aus der Flachseite des Codierelements vorstehende und zurückspringende Abschnittsberge und -täler ausgebildet sein. Je nach Ausgestaltung des Sensors können die Abschnitte auch farbliche Markierungen auf dem Codierelement darstellen.

Das Codierelement besitzt mit den Abschnitten 42a und 42e zwei Abschnitte vom ersten Typ, die die Geradeausfahrt anzeigen. Hierbei zeigt der Abschnitt 42a die Geradeausfahrt in Vorwärtsrichtung (V) und 42e die Geradeausfahrt in Rückwärtsrichtung (R). Angrenzend an die Abschnitte 42a und 42e kommen die Abschnitte 44a und 44h bzw. 44d und 44e. Diese besitzen, wie die übrigen Abschnitte vom Typ 2, sämtlich die gleiche Bogenlänge. Der Abschnitt 42b besitzt die geringste Bogenlänge von allen Abschnitten des ersten Typs. Wird also eine Referenzfahrt für das Fahrzeug ausgeführt, so wird der Übergang zu dem Abschnitt vom ersten Typ, Referenzabschnitt 42b, detektiert und die Drehbewegung fortgesetzt, bis der Übergang zu dem Abschnitt des zweiten Typs 44b detektiert ist. Aus der Lage der Übergänge und der Länge des Abschnitts 42b kann dann der Ist-Wert des gelenkten Rades bestimmt werden. Ausgangspunkt ist hierbei, dass das gelenkte Rad zu Beginn seiner Referenzfahrt in Abschnitt 42a und 44a startet und eine Drehrichtung im Uhrzeigersinn erfolgt. Die dabei zurückgelegte Winkelstrecke ist nur unwesentlich größer als das Winkelmaß der Abschnitte 44a + 42b. Bei der Geradeausfahrt in Rückwärtsrichtung übernimmt der Abschnitt 42f die Funktion des Referenzabschnitts.

Die Bogenlänge der einzelnen Abschnitte in Grad aus Fig. 1 findet sich in der nachfolgenden Tabelle:

| Abschnitt | Größe [Grad] |
|---|---|
| 42a | 10,0 |
| 44a | 17,5 |
| 42b | 20,0 |
| 44b | 17,5 |
| 42c | 40,0 |
| 44c | 17,5 |
| 42d | 35,0 |
| 44d | 17,5 |
| 42e | 15,0 |
| 44e | 17,5 |
| 42f | 30,0 |
| 44f | 17,5 |
| 42g | 45,0 |
| 44g | 17,5 |
| 42h | 25,0 |
| 44h | 17,5 |

In dem dargestellten Ausführungsbeispiel aus Fig. 1 besitzt das Codierelement einen Referenzabschnitt 42b, der den kleinsten Winkelbereich besitzt. Die Abschnitte 42a und 42e kennzeichnen die Geradeausfahrt und werden für die Referenzfahrt nicht berücksichtigt.

Die Abschnitte 44 vom zweiten Typ besitzen sämtlich die gleiche Bogenlänge von 17,5°. Dies erlaubt es, durch Nachmessen eines Abschnitts des zweiten Typs einen Korrekturwert zu bestimmen. Wird beispielsweise ein Messwert von 21,5° für einen Abschnitt vom zweiten Typ erfasst, so ergibt sich ein Korrekturwert von 4°. Der Korrekturwert von 4° wird dann von dem erfassten Messwert für die Bogenlänge subtrahiert. Wird also ein Messwert von 34° für einen Abschnitt vom ersten Typ erfasst, so würde bei einem direkten Vergleich dieser dem Abschnitt 42d mit 35° Bogenlänge zugeordnet werden. Durch den Korrekturwert von 4° kann dieser jedoch dem Abschnitt 42f mit einer Bogenlänge von 30° zugeordnet werden, da die korrigierte Bogenlänge 30° beträgt. Hierdurch wird die erfasste Ist-Stellung des gelenkten Rades deutlich beeinflusst. Von Zeit zu Zeit kann der Korrekturwert neu erfasst werden, um beispielsweise einer sich verändernden Position der Sensoren entgegenzuwirken.

### Bezugszeichenliste

- 10: Rad
- 12: Drehschemel
- 14: Elektromotor
- 16: Getriebe
- 18: Abgangswelle
- 20: Ritzel
- 22: Zahnrad
- 24: Codierelement
- 26: Sensor
- 28: Lenksteuerung
- 30: Leitung
- 32: Leitung
- 34: Leitung
- 36: Lenkrad
- 38: Leitung
- 40: Codierelement
- 42a - 42h: Abschnitte
- 44a - 44h: Abschnitte

## Patentansprüche

1. Vorrichtung zur Erfassung der Ist-Stellung eines gelenkten Rades bei einer elektrischen Lenkung für ein Flurförderzeug mit
- einem Lenkantrieb, der das gelenkte Rad stellt, und
- einer Erfassungseinrichtung, die ein scheibenförmiges Codierelement (40) mit einer Vielzahl von in ihrer Bogenlänge unterschiedlichen Abschnitten (42a-42h, 44a-44h) und einem relativ dazu bewegten Sensor aufweist,
- wobei das Codierelement alternierend zwei Typen von Abschnitten aufweist, wobei die Abschnitte (42a-42h) von einem ersten Typ jeweils eine unterschiedliche Bogenlänge gegenüber anderen Abschnitten und die Abschnitte (44a-44h) von einem zweiten Typ jeweils die gleiche Bogenlänge gegenüber anderen Abschnitten vom zweiten Typ aufweisen,
- das gelenkte Rad und das Codierelement derart relativ zueinander angeordnet sind, dass mindestens einer der Abschnitte von dem ersten Typ vollständig überfahren und in seiner Bogenlänge erfasst wird, wobei die erfasste Bogenlänge des oder der Abschnitte vom ersten Typ vor einer Positionsbestimmung korrigiert wurden.

2. Vorrichtung nach Anspruch 1, **dadurch gekennzeichnet, dass** der Sensor Übergänge zwischen Abschnitten vom ersten und zweiten Typ detektieren kann.

3. Vorrichtung nach Anspruch 1 oder 2, **dadurch gekennzeichnet, dass** die Erfassungseinheit den Ist-Wert des gelenkten Rades aus einem Übergang zu einem Abschnitt vom ersten Typ und der erfassten Bogenlänge des Abschnitts bestimmt.

4. Vorrichtung nach Anspruch 3, **dadurch gekennzeichnet, dass** die Bogenlänge für einen Abschnitt vom zweiten Typ erfasst und mit einer vorbestimmten Referenzbogenlänge verglichen wird, wobei eine Abweichung zwischen erfasster Bogenlänge und Referenzbogenlänge als ein Korrekturwert gespeichert wird.

5. Vorrichtung nach Anspruch 4, **dadurch gekennzeichnet, dass** der gespeicherte Korrekturwert bei der Bestimmung der Bogenlänge für den Abschnitt vom ersten Typ berücksichtigt wird.

6. Vorrichtung nach einer der Ansprüche 1 bis 5, **dadurch gekennzeichnet, dass** die Bogenlänge für zwei Abschnitte vom ersten Typ erfasst und deren Differenzwert mit einem vorbestimmten Differenzwert verglichen wird, wobei eine Abweichung zwischen erfasstem und vorbestimmtem Differenzwert als ein Korrekturwert gespeichert wird.

7. Vorrichtung nach Anspruch 6, **dadurch gekennzeichnet, dass** der Korrekturwert bei der Bestimmung der Bogenlänge für den Abschnitt vom ersten Typ berücksichtigt wird.

8. Vorrichtung nach Anspruch 1, **dadurch gekennzeichnet, dass** die Abschnitte vom ersten und zweiten Typ aus Messbergen und Messtälern bestehen.

9. Vorrichtung nach Anspruch 8, **dadurch gekennzeichnet, dass** die Abschnitte auf einer Flachseite des scheibenförmigen Codierelements ausgebildet sind.

10. Vorrichtung nach einem der Ansprüche 1 bis 9, **dadurch gekennzeichnet, dass** die Differenz der Bogenlänge zwischen zwei benachbarten Abschnitten des ersten Typs möglichst groß ist.

11. Vorrichtung nach Anspruch 10, **dadurch gekennzeichnet, dass** die Differenz der Bogenlänge zu dem oder den Referenzabschnitten maximal ist.

12. Vorrichtung nach einem der Ansprüche 1 bis 11, **dadurch gekennzeichnet, dass** Abschnitte vom ersten Typ für eine oder beide Richtungen der Geradeausfahrt vorgesehen sind, deren Bogenlänge kleiner als die der Referenzabschnitte ist.

13. Verfahren zur Erfassung von einer Ist-Stellung eines gelenkten Rades bei einer elektrischen Lenkung für ein Flurförderzeug mit einem das gelenkte Rad stellenden Lenkantrieb und einem mit einem Sensor zusammenwirkenden Codierelement, das eine Vielzahl von sich in ihrer Bogenlänge unterscheidenden Abschnitten aufweist, wobei der Sensor und das Codierelement relativ zueinander drehbar sind und die Abschnitte zwei von dem Sensor detektierbare Typen aufweisen, die alternierend entlang dem Umfang angeordnet sind, das folgende Verfahrensschritte aufweist:
- das Rad wird gedreht, die Bogenlänge eines Abschnitts vom zweiten Typ wird erfasst, mit einem Referenzwert verglichen und die Abweichung zwischen erfasstem Wert und Referenzwert wird als Korrekturwert gespeichert,
- das Rad wird in eine erste Drehrichtung gedreht, bis der Sensor einen ersten Übergang zwischen zwei benachbarten Abschnitten des Codierelements detektiert,
- nachfolgend wird unter Beibehaltung oder Umkehr der Drehrichtung das gelenkte Rad derart ausgelenkt, dass mindestens ein Abschnitt vom ersten Typ vollständig überstrichen wird,
- die Bogenlänge des oder der überstrichenen Abschnitte wird korrigiert,
- und die Ist-Position des gelenkten Rades wird aus dem korrigierten Wert für die Bogenlänge bestimmt.

14. Verfahren nach Anspruch 13, **dadurch gekennzeichnet, dass** die Drehbewegung ohne Umkehr der Drehrichtung erfolgt.

15. Verfahren nach Anspruch 13 oder 14, **dadurch gekennzeichnet, dass** die Bogenlänge für einen Abschnitt vom zweiten Typ erfasst und mit einer vorbestimmten Referenzbogenlänge verglichen wird, wobei eine Abweichung zwischen erfasster Bogenlänge und Referenzbogenlänge als ein Korrekturwert gespeichert wird.

16. Verfahren nach Anspruch 15, **dadurch gekennzeichnet, dass** der gespeicherte korrekturwert bei der Bestimmung der Bogenlänge für den Abschnitt vom ersten Typ berücksichtigt wird.

17. Verfahren nach einem der Ansprüche 13 bis 16, **dadurch gekennzeichnet, dass** die Bogenlänge für zwei Abschnitte vom ersten Typ erfasst und deren Differenzwert mit einem vorbestimmten Differenzwert verglichen wird, wobei eine Abweichung zwischen erfasstem und vorbestimmtem Differenzwert als ein Korrekturwert gespeichert wird.

18. Verfahren nach Anspruch 17, **dadurch gekennzeichnet, dass** der Korrekturwert bei der Bestimmung der Bogenlänge für den Abschnitt vom ersten Typ berücksichtigt wird.

19. Verfahren nach einem der Ansprüche 13 bis 18, **dadurch gekennzeichnet, dass** auch die Position für den Übergang korrigiert wird.

## Claims

1. An apparatus for the detection of the actual position of a steered wheel in an electric steering for an industrial truck, with
• a steering drive, which adjusts the steered wheel, and
• a detection device, which comprises a disc-shaped encoding element (40) having a plurality of sections (42a-42h, 44a-44h) different in their arc length and a sensor moved relatively thereto,
• wherein the encoding element comprises alternatingly two types of sections, wherein the sections (42a-42h) of a first type each have an arc length different from other sections, and the sections (44a-44h) of a second type have always the same arc length as have other sections of the second type,
• the steered wheel and the encoding element are arranged with respect to each other such that at least one of the sections of the first type is completely swept and detected in its arc length, wherein the detected arc length of the section(s) of the first type have been corrected before the determination of a position.

2. The apparatus according to claim 1, **characterised in that** the sensor can detect transitions between sections of the first and the second type.

3. An apparatus according to claim 1 or 2, **characterised in that** the detection unit determines the actual value of the steered wheel from a transition to a section of the first type and the detected arc length of the section.

4. The apparatus according to claim 3, **characterised in that** the arc length is detected for a section of the second type and is compared with a predetermined reference arc length, wherein a discrepancy between the detected arc length and the reference arc length is memorised as a correction value.

5. The apparatus according to claim 4, **characterised in that** the memorised correction value is taken into account in the determination of the arc length for the section of the first type.

6. An apparatus according to one of the claims 1 to 5, **characterised in that** the arc length is detected for two sections of the first type and the difference value thereof is compared with a predetermined difference value, wherein a discrepancy between the detected and the predetermined difference value is memorised as a correction value.

7. The apparatus according to claim 6, **characterised in that** the correction value is taken into account in the determination of the arc length for the section of the first type.

8. The apparatus according to claim 1, **characterised in that** the sections of the first and the second type consist of measurement hills and measurement valleys

9. The apparatus according to claim 8, **characterised in that** the sections are formed on a flat side of the disc-shaped encoding element.

10. An apparatus according to one of the claims 1 to 9, **characterised in that** the difference of the arc lengths between two neighbouring sections of the first type is as great as possible.

11. The apparatus according to claim 10, **characterised in that** the difference of the arc length to the reference section(s) is maximum.

12. An apparatus according to one of the claims 1 to 11, **characterised in that** the sections of the first type are provided for one or both directions of driving straight ahead, whose arc length is smaller than that of the reference sections.

13. A method for the detection of a real position of a steered wheel in an electric steering for an industrial truck, with a steering drive adjusting the steered wheel and an encoding element co-operating with a sensor, which comprises a plurality of sections (42a-42h, 44a-44h) differing in their arc length, wherein the sensor and the encoding element can be rotated relative to one another, and the sections comprise two types which can be detected by the sensor, which are arranged alternatingly along the perimeter, the method comprising the following procedural steps:
• the wheel is rotated, the arc length of a section of the first type is detected, compared with a reference value and the discrepancy between the detected value and the reference value is memorised as correction value,
• the wheel is rotated into a first rotational direction, until the sensor detects a first transition between two neighbouring sections of the encoding element,
• thereafter, the steered wheel is deflected, maintaining or reversing the rotational direction, such that at least one section of the first type is completely swept,
• the arc length of the swept section(s) is corrected,
• and the real position of the steered wheel is determined from the corrected value for the arc length.

14. The method according to claim 13, **characterised in that** the rotational movement takes place without reversing the rotational direction.

15. A method according to claim 13 or 14, **characterised in that** the arc length is detected for a section of the second type and is compared with a predetermined reference arc length, wherein a discrepancy between the detected arc length and the reference arc length is memorised as a correction value.

16. The method according to claim 15, **characterised in that** the memorised correction value is taken into account in the determination of the arc length for the section of the first type.

17. A method according to claim 13 to 16, **characterised in that** the arc length is detected for two sections of the first type and the difference value thereof is compared with a predetermined difference value, wherein a discrepancy between the detected and the predetermined difference value is memorised as a correction value.

18. The method according to claim 17, **characterised in that** the correction value is taken into account in the determination of the arc length for the section of the first type.

19. A method according to claim 13 to 18, **characterised in that** the position for the transition is corrected also.

## Revendications

1. Dispositif de détection d'une position réelle d'une roue directrice dans une direction directrice électrique pour un chariot de manutention, avec
• un entraînement de braquage, qui règle la roue directrice, et
• un mécanisme de détection, qui comprend un élément de codage (40) en forme de disque avec un grand nombre de sections (42a-42h, 44a-44h) différentes en leur longueur d'arc, et un capteur mobile par rapport à celles-ci,
• dans lequel l'élément de codage comprend deux types de sections en alternante, les sections (42a-42h) d'un premier type toutes ayant une longueur d'arc différente d'autres sections, et les sections (44a-44h) d'un deuxième type ayant toujours la même longueur d'arc comme les autres sections du deuxième type,
• la roue directrice et l'élément de codage étant arrangées l'une par rapport à l'autre de sorte tellement qu'au moins une des sections du premier type est complètement balayée et détectée en son longueur d'arc, la longueur d'arc détectée de la ou des section(s) du premier type étant corrigée avant une détermination de position..

2. Dispositif selon la revendication 1, **caractérisé en ce que** le capteur peut détecter des transitions entre des sections du premier et du deuxième type.

3. Dispositif selon la revendication 1 ou 2, **caractérisé en ce que** l'unité de détection détermine la valeur réelle de la roue directrice à partir d'une transition à une section du premier type et la longueur d'arc détectée de la section.

4. Dispositif selon la revendication 3, **caractérisé en ce que** la longueur d'arc est détectée pour une section du deuxième type est comparée à une longueur d'arc de référence prédéterminée, un écart entre la longueur d'arc détectée et la longueur d'arc de référence étant mémorisé comme une valeur de correction.

5. Dispositif selon la revendication 4, **caractérisé en ce que** la valeur de correction mémorisée est prise en compte dans la détermination de la longueur d'arc pour la section du premier type.

6. Dispositif selon une des revendications 1 à 5, **caractérisé en ce que** la longueur d'arc est détectée pour deux sections du premier type, dont la valeur de différence est comparée à une valeur de différence prédéterminée, un écart entre la valeur de différence détectée et la valeur de différence prédéterminée étant mémorisé comme une valeur de correction.

7. Dispositif selon la revendication 6, **caractérisé en ce que** la valeur de correction est prise en compte dans la détermination de la longueur d'arc pour la section du premier type.

8. Dispositif selon la revendication 1, **caractérisé en ce que** les sections du premier et du deuxième type consistent de montagnes de mesurage et de vallées de mesurage.

9. Dispositif selon la revendication 8, **caractérisé en ce que** les sections sont formées sur un coté plat de l'élément de codage en forme de disque.

10. Dispositif selon une des revendications 1 à 9, **caractérisé en ce que** la différence des longueurs d'arc entre deux sections du premier type adjacentes est aussi grande que possible.

11. Dispositif selon la revendication 10, **caractérisé en ce que** la différence de la longueur d'arc à la ou les section(s) de référence est maximale.

12. Dispositif selon une des revendications 1 à 11, **caractérisé en ce que** des sections du premier type sont prévues pour une ou les deux directions de l'avance en ligne droite, dont la longueur d'arc est plus petite que celle des sections de référence.

13. Procédé de détection d'une position réelle d'une roue directrice dans une direction directrice électrique pour un chariot de manutention, avec un entraînement de braquage réglant la roue directrice et un élément de codage co-operant avec un capteur, qui comprend un grand nombre de sections différentes en leur longueur d'arc, le capteur et l'élément de codage étant rotatifs l'un par rapport à l'autre, les sections comprenant deux types qui peuvent être détectés par le capteur, qui sont arrangés le long du périmètre en alternance, le procédé comprend les étapes de procédé suivantes:
• la roue est tournée, la longueur d'arc d'une section du premier type est détectée, comparée à une valeur de référence et l'écart entre la valeur détectée et la valeur de référence is mémorisée comme une valeur de correction,
• la roue est tournée dans une première direction de rotation, jusqu'à ce que le capteur détecte une première transition entre deux sections adjacentes de l'élément de codage,
• ensuite, la roue directrice est déviée, en retenant ou renversant la direction de rotation tellement qu'au moins une section du premier type est complètement balayée,
• la longueur d'arc de la ou des section(s) balayée(s) est corrigée,
• et la position réelle de la roue directrice est déterminée à partir de la valeur corrigée pour la longueur d'arc.

14. Procédé selon la revendication 13, **caractérisé en ce que** le mouvement de rotation prend place sans renversement du sens de rotation.

15. Procédé selon la revendication 13 ou 14, **caractérisé en ce que** la longueur d'arc est détectée pour une section du deuxième type est comparée à une longueur d'arc de référence prédéterminée, un écart entre la longueur d'arc détectée et la longueur d'arc de référence étant mémorisé comme une valeur de correction.

16. Procédé selon la revendication 15, **caractérisé en ce que** la valeur de correction mémorisée est prise en compte dans la détermination de la longueur d'arc pour la section du premier type.

17. Procédé selon la revendication 13 to 16, **caractérisé en ce que** la longueur d'arc est détectée pour deux sections du premier type, dont la valeur de différence est comparée à une valeur de différence prédéterminée, un écart entre la valeur de différence détectée et la valeur de différence prédéterminée étant mémorisé comme une valeur de correction.

18. Procédé selon la revendication 17, **caractérisé en ce que** la valeur de correction est prise en compte dans la détermination de la longueur d'arc pour la section du premier type.

19. Procédé selon la revendication 13 to 18, **caractérisé en ce que** la position pour la transition est corrigée aussi.
